# DEMANDE DE BREVET EUROPEEN

(11) **EP 0 834 686 A1**
(43) Date de publication de la demande: **08.04.1998**
(21) Numéro de dépôt: 97402340.0
(22) Date de dépôt: 06.10.1997
(51) Int. Cl.: F16J 15/02, B60Q 1/02

(54) **Joint, notamment joint d'aspect, pour dispositifs d'éclairage ou de signalisation de véhicules automobiles, et dispositifs d'éclairage ou de signalisation l'incorporant**

(30) Priorité: 07.10.1996 FR 9612177
(71) Demandeur: VALEO VISION, 93000 Bobigny (FR)
(72) Inventeur: Rives, Claude, 77810 Thomery (FR)
(74) Mandataire: Le Forestier, Eric

(57) **Abrégé**

Un joint (40), notamment joint d'aspect, est réalisé en un matériau souple et est apte à être monté à la périphérie d'un dispositif d'éclairage ou de signalisation de véhicule automobile pour combler un interstice (50) entre ce dispositif et la région avoisinante du véhicule.

Selon l'invention, le joint comprend une partie de fixation (401) et une partie formant joint (402) présentant une section transversale en forme générale de crochet.

Application à la réalisation de surfaces de transition non débordantes entre les projecteurs ou les feux de signalisation et la carrosserie avoisinante.

## Description

La présente invention a trait d'une façon générale aux joints interposés entre des dispositifs d'éclairage et/ou de signalisation de véhicules automobiles et la carrosserie avoisinante. Ce type de joint, couramment appelé joint "d'aspect", a pour premier objet d'assurer une continuité de surface entre le voyant ou la glace du dispositif et la carrosserie avoisinante, tout en pouvant le cas échéant jouer un rôle d'étanchéité.

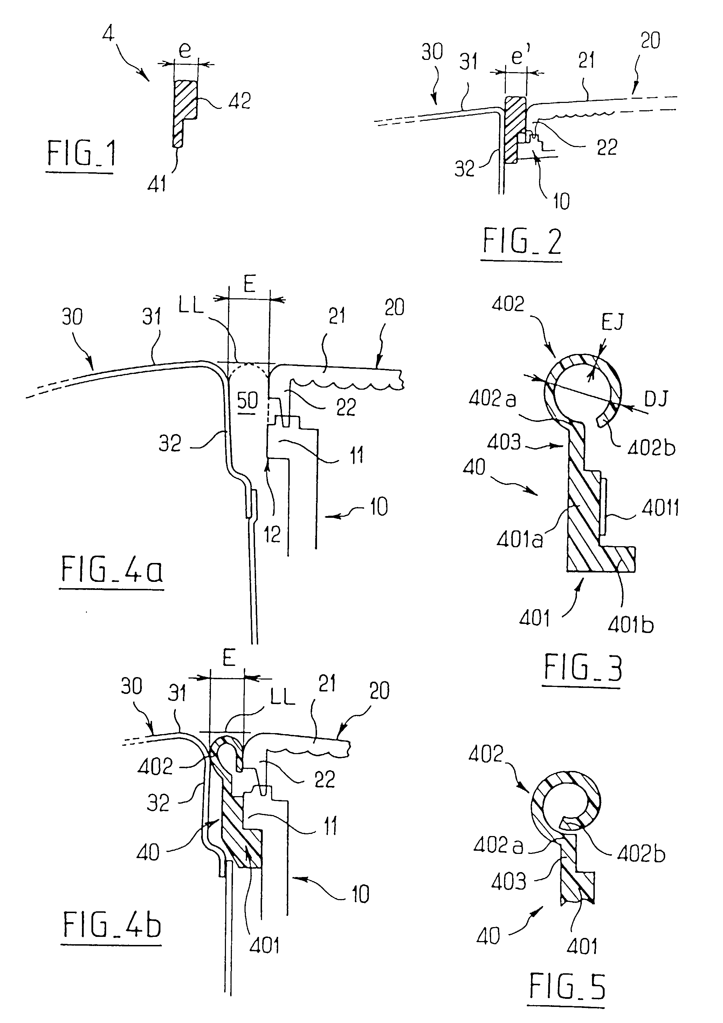

La figure 1 des dessins annexés représente le profil d'un joint connu, désigné par la référence 4. Ce joint possède une partie 41 de fixation sur le socle d'un feu de signalisation, et une partie 42 destinée à être interposée entre un bord rentrant du voyant du feu et une partie rentrante adjacente de la carrosserie.

La partie 42 présente, à l'état libre, une cote en largeur notée e.

Maintenant en référence à la figure 2, qui illustre en coupe transversale la région de transition entre le feu et la carrosserie, lorsque la cote réelle entre le bord rentrant 22 du voyant 20 et le bord rentrant 32 de la partie de carrosserie 30 présente une cote e' inférieure à e, notamment pour des raisons de jeux de montage ou de tolérances de fabrication, alors la compression résultante de la partie 42 du joint provoque son allongement. Il en résulte que le bord libre de cette partie 42, qui normalement doit être sensiblement affleurante avec les surfaces 21 et 31 du voyant et de la carrosserie se situant dans le prolongement l'une de l'autre, déborde sensiblement par rapport à ces surfaces. Ceci est désavantageux de première part sur le plan du style, cette saillie du joint étant inesthétique, de seconde part sur le plan aérodynamique, les écoulements d'air étant perturbés, et de troisième part sur le plan de la tenue mécanique du joint, celui-ci pouvant se trouver arraché lorsque des sollicitations sont exercées sur sa partie en saillie.

Un autre type de joint connu présente un contour semblable à celui de la figure 1, mais sa partie 42 présente un canal central, pour former un tube. Il en résulte une plus grande déformabilité de la partie 42 du joint, pour couvrir une plus grande gamme de tolérances. Mais le problème du débordement du joint lorsqu'il est comprimé reste entier.

La présente invention vise à pallier ces inconvénients de l'état de la technique, et à proposer un joint qui, tout en acceptant une vaste gamme de variations dimensionnelles dans un interstice entre un voyant (ou une glace de projecteur) et la carrosserie avoisinante, ne présente pas le phénomène de débordement précité.

Ainsi la présente invention propose un joint, notamment joint d'aspect, réalisé en un matériau souple et apte à être monté à la périphérie d'un dispositif d'éclairage ou de signalisation de véhicule automobile et à combler un interstice entre ce dispositif et la région avoisinante du véhicule, caractérisé en ce qu'il comprend une partie de fixation et une partie formant joint présentant une section transversale en forme générale de crochet.

Des aspects préférés, mais non limitatifs, du joint selon l'invention sont les suivants :
- ladite partie formant joint présente une section transversale de forme généralement annulaire, interrompue entre une partie racine reliée à ladite partie de fixation et une partie d'extrémité libre.
- ladite partie racine se situe essentiellement dans le prolongement de ladite partie de fixation.
- ladite partie de fixation est apte à être fixée à la périphérie du dispositif d'éclairage ou de signalisation.
- ladite partie de fixation présente un profil en forme de "L" en section transversale.
- le joint est fixé à la périphérie du dispositif d'éclairage ou de signalisation par surmoulage au niveau de la partie de fixation.
- ladite section transversale de forme généralement annulaire est interrompue du côté du dispositif d'éclairage ou de signalisation.
- ladite partie formant joint présente au repos une largeur d'environ 4 à 8 mm.
- ladite partie formant joint présente une épaisseur d'environ 0,7 à 1,5 mm.

L'invention propose également un dispositif d'éclairage ou de signalisation pour véhicule automobile, caractérisé en ce qu'il comporte à la périphérie d'une face frontale de celui-ci un joint tel que défini ci-dessus.

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel, outre les figures 1 et 2 décrites ci-dessus :
la figure 3 est une vue en coupe transversale d'un joint selon l'invention,
la figure 4a est une vue en coupe transversale de la région de transition entre un feu de signalisation et la carrosserie avoisinante, en l'absence du joint,
la figure 4b est une vue analogue à la figure 4a, avec le joint, et
la figure 5 est une vue en coupe transversale d'une partie du joint, illustrant une déformation particulière de ladite partie du joint.

En référence tout d'abord à la figure 3, un joint d'aspect profilé selon l'invention, réalisé par exemple en caoutchouc cellulaire spongieux (caoutchouc "mousse") ou en caoutchouc compact, est désigné par la référence 40 et comprend une partie de fixation 401 sur le socle d'un feu de signalisation, une partie 402 formant le joint proprement-dit, et une partie 403 de liaison entre les parties 401 et 402.

La partie 401 présente en l'espèce un profil en forme de "L", avec une branche longitudinale 401a sur une face latérale de laquelle est prévu un adhésif 4011, et une branche transversale plus courte 401b.

La partie 402 présente en section transversale la forme d'un crochet de section généralement annulaire fendue, présentant au repos sur une étendue angulaire légèrement inférieure à 360°. Cette partie est reliée à la partie 401 via la partie de liaison 403 au niveau d'une première extrémité angulaire (partie racine 402a), et est libre à l'autre extrémité angulaire, l'extrémité libre 402b se situant à proximité de ladite partie racine 402a.

La partie de liaison 403 présente une épaisseur inférieure à celle de la grande branche 401a de la partie 401.

La figure 4a illustre la carrosserie 30, possédant une partie de surface externe 31 et une partie rentrante 32, et une partie du feu de signalisation possédant un socle 10 et un voyant 20.

Le socle 10 possède au voisinage du montage du voyant 20 un rebord périphérique sortant 11 définissant une arête 12 à angle droit.

Le voyant 20 possède une partie 21 de sortie de lumière et un rebord périphérique rentrant 22 fixé au socle au niveau de son bord libre.

L'interstice 50 entre le rebord 22 du voyant et la partie rentrante 32 de la carrosserie 30 présente une largeur nominale E, celle-ci pouvant varier dans une mesure importante en fonction notamment des tolérances de fabrication et des jeux de montage. Par ailleurs, on a désigné par LL la ligne de limite au-delà en deçà de laquelle le joint doit rester confiné lors du montage.

Le joint 400 est fixé à la périphérie du socle 10 à l'aide de l'adhésif 4011 de telle manière que l'arête 12 du socle vienne se loger dans l'angle droit du profil en "L" de la partie 401 du joint.

Le feu de signalisation est alors mis en place dans l'ouverture de la carrosserie à partir de l'extérieur, et la région extérieure de la partie 402 formant joint à section annulaire fendue vient glisser contre la partie rentrante 32 de la carrosserie, en même temps que cette partie formant joint s'écrase pour s'adapter à la largeur réelle de l'interstice 50. Ceci fait que la partie formant joint s'enroule sur elle même, pour diminuer de largeur sans que cette diminution n'occasionne de débordement du joint par rapport à la ligne de limite LL, comme illustré sur la figure 4b. Plus précisément, le frottement entre la partie 402 du joint et la surface de la partie rentrante 32 de la carrosserie crée un moment qui tend à faire tourner cette partie 402 dans le sens des aiguilles d'une montre sur la figure 4b, ce qui favorise la fermeture sur elle-même de ladite partie 402, et donc la limitation de son encombrement vers l'extérieur.

La figure 5 illustre un cas où, la largeur E de l'insterstice étant réduite, la partie joint 402 se referme et s'enroule sur elle-même à un degré tel que son bord d'extrémité libre 402b dans la direction angulaire vient recouvrir sa partie racine 402a adjacente à la partie de liaison 403.

Ainsi le joint selon l'invention est capable de remplir de façon régulière un interstice 50 de largeur très variable sans donner lieu à un quelconque phénomène significatif de débordement du joint par rapport à la surface de la partie de carrosserie 31 et de la partie de voyant 21.

A titre d'exemple non limitatif, lorsque les jeux et tolérances de fabrication sont tels que la largeur E de l'intersctice 50 doit varier entre 3 et 6 mm, alors on donne à la partie formant joint 402 un diamètre extérieur au repos DJ égal ou légèrement supérieur à 6 mm, et une épaisseur EJ d'environ 1 mm.

Plus généralement, la partie joint 402 présentera de préférence une largeur au repos d'environ 4 à 8 mm et une épaisseur d'environ 0,7 à 1,5 mm.

Bien entendu, la présente invention n'est nullement limitée à la forme de réalisation décrite et représentée, mais l'homme du métier saura y apporter toute variante ou modification conforme à son esprit.

En particulier, le joint selon l'invention peut être utilisé non seulement entre un dispositif d'éclairage et/ou de signalisation et la carrosserie, mais également entre un tel dispositif et tout autre organe affleurant à la surface extérieure du véhicule, et notamment un autre dispositif d'éclairage et/ou de signalisation (en particulier entre un feu avant et le projecteur adjacent).

En outre, le joint peut être fixé au dispositif d'éclairage ou de signalisation mis en place, comme décrit ci-dessus, mais également, en variante, dans l'ouverture destinée à recevoir ce dispositif.

On notera enfin que le joint selon l'invention peut être fixé sur le dispositif d'éclairage ou de signalisation par une technique de surmoulage.

## Revendications

1. Joint (40), notamment joint d'aspect, réalisé en un matériau souple et apte à être monté à la périphérie d'un dispositif d'éclairage ou de signalisation de véhicule automobile et à combler un interstice (50) entre ce dispositif et la région avoisinante du véhicule, caractérisé en ce qu'il comprend une partie de fixation (401) et une partie formant joint (402) présentant une section transversale en forme générale de crochet.

2. Joint selon la revendication 1, caractérisé en ce que ladite partie formant joint (402) présente une section transversale de forme généralement annulaire, interrompue entre une partie racine (402a) reliée à ladite partie de fixation (401) et une partie d'extrémité libre (402b).

3. Joint selon la revendication 2, caractérisé en ce que ladite partie racine (402a) se situe essentiellement dans le prolongement de ladite partie de fixation (401a).

4. Joint selon l'une des revendications 1 à 3, caractérisé en ce que ladite partie de fixation (401) est apte à être fixée à la périphérie du dispositif d'éclairage ou de signalisation.

5. Joint selon la revendication 4, caractérisé en ce que ladite partie de fixation (401) présente un profil en forme de "L" en section transversale.

6. Joint selon l'une des revendications 1 à 3, caractérisé en ce que le joint est fixé à la périphérie du dispositif d'éclairage ou de signalisation par surmoulage au niveau de la partie de fixation.

7. Joint selon l'une des revendication 2 et 3 prise en combinaison avec l'une des revendications 4 à 6, caractérisé en ce que ladite section transversale de forme généralement annulaire est interrompue du côté du dispositif d'éclairage ou de signalisation.

8. Joint selon l'une des revendications 1 à 7, caractérisé en ce que ladite partie formant joint (402) présente au repos une largeur d'environ 4 à 8 mm.

9. Joint selon l'une des revendications 1 à 8, caractérisé en ce que ladite partie formant joint (402) présente une épaisseur d'environ 0,7 à 1,5 mm.

10. Dispositif d'éclairage ou de signalisation pour véhicule automobile, caractérisé en ce qu'il comporte à la périphérie d'une face frontale (21) de celui-ci un joint selon l'une des revendications 1 à 9.
